# EUROPÄISCHE PATENTSCHRIFT

(11) **EP 1 211 054 B1**
(45) Veröffentlichungstag und Bekanntmachung des Hinweises auf die Patenterteilung: **14.03.2012**
(21) Anmeldenummer: 01123743.5
(22) Anmeldetag: 04.10.2001
(51) Int. Cl.: B29C 70/46, B29C 70/08

(54) **Verfahren zum Herstellen einer Faserverbundstruktur**
Process for the production of a fiber reinforced composite structure
Procédé pour la fabrication d'une structure composite renforcée par des fibres

(30) Priorität: 01.12.2000 DE 10059801
(43) Veröffentlichungstag der Anmeldung: 05.06.2002
(73) Patentinhaber: Bayerische Motoren Werke Aktiengesellschaft, 80809 München (DE)
(72) Erfinder: Heidenreich, Klaus, 83026 Rosenheim (DE); Ulrich, Josef, 86570 Inchenhofen (DE); Meyr, Wolfgang, 80807 München (DE)

(56) Entgegenhaltungen:
- EP-A- 0 273 145
- WO-A-99/38683
- GB-A- 1 341 438
- GB-A- 2 342 889
- US-A- 4 044 188
- US-A- 5 431 995
- PATENT ABSTRACTS OF JAPAN vol. 010, no. 385 (M-548), 24. Dezember 1986 (1986-12-24) & JP 61 175010 A (HINO MOTORS LTD), 6. August 1986 (1986-08-06)

## Beschreibung

Die Erfindung bezieht sich auf ein Verfahren zum Herstellen einer Faserverbundstruktur aus einem im Wege des Fließpressens unter Wärmeeinwirkung konsolidierbaren Zuschnitt aus mindestens einer fließfähigen, mit dem Matrixsystem durchtränkten und beim Fließpressen umstrukturierten Faserlage.

Es ist bekannt, Faserverbundbauteile aus einem vielschichtigen Faserlaminat in der Weise herzustellen, dass die äußeren Laminatschichten mit einem hohen und die inneren Laminatschichten mit einem vergleichsweise geringen Matrixanteil vorgetränkt werden und dann der gesamte Laminataufbau in einem einzigen Arbeitsgang ausgehärtet wird, um so ein Faserverbundbauteil mit einer hohen Oberflächenqualität und dennoch guten Festigkeits- und Steifigkeits-Kennwerten zu erhalten.

Bei dem Verfahren der eingangs genannten Art hingegen, welches unter der Bezeichnung SMC-Verfahren bekannt ist, kommt es beim Verpressen unter Wärmeeinwirkung zu einer ausgeprägten Fließbewegung der Matrix- und Faseranteile, so dass die auf diesem Wege hergestellten Bauteile weitgehend homogene Materialeigenschaften besitzen, nicht aber Faserverbundstrukturen hoher Oberflächenqualität und gleichzeitig hoher mechanischer Festigkeit und Steifigkeit in einem Arbeitsgang hergestellt werden können.

Aufgabe der Erfindung ist es, ein Verfahren der eingangs genannten Art so auszubilden, dass sich Faserverbundbauteile mit einer qualitativ hochwertigen Oberfläche und gleichzeitig hoher spezifischer Steifigkeit und Festigkeit mit geringem Fertigungsaufwand nach der SMC-Methode herstellen lassen.

So wird bei dem aus der JP 61 175 010 A bekannten SMC-Verfahren eine Faserverbundstruktur abgestufter Bauteilsteifigkeit aus unterschiedlichen SMC-Materialien in der Weise hergestellt, dass eine Außenlage geringer und eine aus mehreren Schichten kleinerer Zuschnittsgröße bestehende Strukturlage hoher Steifigkeit als Halbzeugzuschnitt in einem Formwerkzeug abgelegt und zu einem einerseits weichen und andrerseits steifen Bauteit fließverpresst werden.

Diese Aufgabe wird erfindungsgemäß durch das im Patentanspruch 1 gekennzeichnete Verfahren gelöst.

Erfindungsgemäß wird aufgrund des mehrlagigen Aufbaus des Fließpressmaterials mit einem vergleichsweise geringen Fasergehalt in der Außenlage und einer nach Größe und/oder Fließfähigkeit unterschiedlichen Dimensionierung von Außen- und faserreicher Strukturlage sichergestellt, dass der Faserlagenaufbau beim Fließpressvorgang nicht homogen durchmischt wird, sondern seinen geringen Fasergehalt an der Außenseite und den hohen Faseranteil im Bereich der Strukturlage beibehält und dementsprechend das nach der SMC-Methode gefertigte Faserverbundbauteil mit einer qualitativ hochwertigen Oberfläche, einer sogenannten Class-A-Oberfläche, wie sie etwa von lackierbaren Karosserieaußenteilen im Kraftfahrzeugbau gefordert wird, und zugleich mit gewichtsbezogen hohen mechanischen Kennwerten einstückig in einem einzigen Fließpressvorgang herstellbar ist.

In fertigungstechnisch besonders bevorzugter Weise wird die Fließfähigkeit der Faserlagen gemäß Anspruch 2 dadurch unterschiedlich voreingestellt, dass bei der Herstellung des SMC-Halbzeugs die dann zur Aufbereitung des Matrixsystems ohnehin zugegebene Eindickmittelmenge entsprechend unterschiedlich dosiert wird.

Nach Anspruch 3 wird die Strukturlage vorzugsweise aus mehreren, einzeln vorgefertigten Faserschichten aufgebaut, um so je nach den einwirkenden Betriebslasten Bauteile mit unterschiedlicher Strukturlagendicke auf fertigungstechnisch einfache Weise, nämlich aus einem serienmäßig produzierten SMC-Halbzeug konstanter Wandstärke, herstellen zu können.

Wahlweise oder zusätzlich kann die Strukturlage, wie nach Anspruch 4 bevorzugt, aus Gründen eines erhöhten Lastwiderstands auch aus Fasern mit einem höheren Fasermodul vorgefertigt werden.

Nach Anspruch 5 schließlich empfiehlt es sich insbesondere zur Herstellung von Kraftfahrzeug-Karosseriebauteilen als Matrixsystem ein duroplastisches Reaktionsharzsystem zu verwenden.

Weitere Einzelheiten der Erfindung ergeben sich aus der nachfolgenden, beispielsweisen Beschreibung in Verbindung mit den Zeichnungen. Diese zeigen in stark schematisierter Darstellung:
- **Fig. 1**: einen aus einem SMC-Halbzeug hergestellten Zuschnitt mit einem Faserlagenaufbau nach der Erfindung; und
- **Fig. 2**: den Zuschnitt gemäß Fig. 1 nach dem Einlegen in ein Pressformwerkzeug.

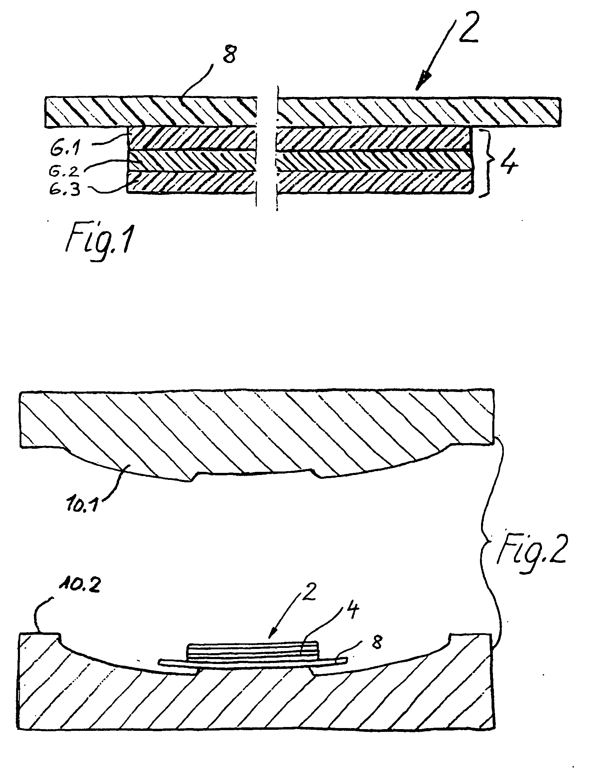

Der in Fig. 1 gezeigte Zuschnitt 2 besteht aus einer Strukturlage 4, welche aus mehreren, - bei dem gezeigten Ausführungsbeispiel drei -, aus einem SMC-Halbzeug in Form einer fließfähigen, reaktionsharzgetränkten Fasermatte mit einem Fasergehalt von ca. 30 bis 60% einzeln zugeschnittenen, übereinander gelegten Faserschichten 6.1, 6.2 und 6.3 aufgebaut wird, sowie einer ebenfalls aus einer SMC-Fasermatte zugeschnittenen Außenlage 8, die im Hinblick auf eine hohe Oberflächenqualität des herzustellenden Bauteils, wie sie etwa von sogenannten Class-A-Karosserieteilen im Kraftfahrzeugbau gefordert wird, aus einer Fasermatte mit einem vergleichsweise geringen Faseranteil von ca. 5 bis 15 % angefertigt wird.

Damit die Struktur- und die Außenlage 4, 8 beim nachfolgenden Presstließvorgang ihre unterschiedlichen Faseranteile weitgehend beibehalten und somit ein Faserverbundteil erzeugt wird, bei welchem eine Class-A-Oberfläche auf fertigungstechnisch einfache Weise mit hohen mechanischen Kennwerten gewichtsoptimal kombiniert ist, werden die Strukturlage 4 und die Außenlage 8 unterschiedlich groß zugeschnitten, nämlich gemäß Fig. 1 die Außenlage 8 um etwa 20 bis 30 % größer als die Strukturlage 4. Wahlweise, vorzugsweise aber zusätzlich zu dem so erzielten Trennungseffekt werden die Struktur- und die Außenlage 4, 8 mit einem beim Fließpressprozess unterschiedlichen Fließverhalten vorgefertigt, was sich am einfachsten dadurch erreichen lässt, dass bei der SMC-Fasermattenproduktion die Zugabe an Eindickmittel für das Matrixsystem für die Strukturlage 4 und für das Matrixsystem für die Außenlage 8 entsprechend unterschiedlich dosiert wird.

Der so aufgebaute Zuschnittstapel 2 wird gemäß Fig. 2 im mittleren Bereich des Pressformwerkzeugs 10 abgelegt, und anschließend wird das Pressformwerkzeug 10 geschlossen und Struktur- und Faserlage 4, 8 werden unter Wärmeeinwirkung derart fließverpresst, dass die gesamte Formkavität des Formwerkzeugs 10 mit Faserverbundwerkstoff ausgefüllt wird, wobei der abgestufte Fasergehalt mit dem geringen Faseranteil an der konkaven Bauteil-Außenfläche und dem hohen Faseranteil im restlichen Faserverbundmaterial erhalten bleibt, woraufhin das fertige Bauteil nach Ablauf einer entsprechenden Aushärtungszeit entformt werden kann.

Im Rahmen der Erfindung kann die Strukturlage 4 selbstverständlich auch beidseitig oder auch allseitig mit einer Außenlage 8 belegt werden, um so am Faserverbundbauteil sowohl auf der Ober- als auch auf der Unterseite eine Class-A-Oberfläche zu erhalten. Weiterhin kann die Fasermatte für die Strukturlage 4 aus hochmoduligen Verstärkungs-. z.B. Carbonfasern hergestellt werden, während für die Fasermatte der Außenlage(n) vorzugsweise Glasfasern verwendet werden.

## Patentansprüche

1. Verfahren zum Herstellen einer Faserverbundstruktur nach der SMC-Methode aus einem im Wege des Fließpressens unter Wärmeeinwirkung konsolidierbaren Zuschnitt (2) aus mindestens zwei fließfähigen, mit einem Matrixsystem durchtränkten und beim Fließpressen umstrukturierten Faserlagen wobei der Zuschnitt (2) mehrlagig aus mindestens einer Außenlage (8) mit einem geringen Faseranteil und einer Strukturlage (4) mit einem vergleichsweise hohen Faseranteil aufgebaut wird und die Außen- und Strukturlage (8, 4) in unterschiedlicher Größe und/oder Fließfähigkeit vorgefertigt und gemeinsam zum fertigen Bauteil fließverpresst werden, so dass auf der Oberfläche der Außenlage (8) eine Class-A-Oberfläche ausgebildet wird.

2. Verfahren nach Anspruch 1, **dadurch gekennzeichnet, dass** der Zuschnitt aus Faserlagen mit durch Eindickung des Matrixsystems jeweils unterschiedlich vorgewählter Fließfähigkeit aufgebaut wird.

3. Verfahren nach Anspruch 1 oder 2, **dadurch gekennzeichnet, dass** die Strukturlage (4) aus mehreren, einzeln vorgefertigten Fließfaserschichten (6.1, 6.2, 6.3) hergestellt wird.

4. Verfahren nach einem der vorhergehenden Ansprüche, **dadurch gekennzeichnet, dass**
die Strukturlage (4) aus Fasern mit einem höheren Fasermodul vorgefertigt wird.

5. Verfahren nach einem der vorhergehenden Ansprüche, **dadurch gekennzeichnet, dass**
die Faserlagen aus reaktionsharzgetränkten Fasermatten hergestellt werden

## Claims

1. A method for producing a fibre composite structure by the SMC method from a pre-cut part (2), which can be consolidated by extrusion under the action of heat, from at least two flowable fibre layers, which are impregnated with a matrix system and restructured during extrusion, wherein the pre-cut part (2) is constructed in multiple layers from at least one outer layer (8) with a low fibre fraction and a structure layer (4) with a comparatively high fibre fraction and the outer layer and structure layer (8, 4) are prefabricated with a different size and/or flowability and are extruded together to form the finished component, so that a class A surface is formed on the surface of the outer layer (8).

2. A method according to claim 1, **characterised in that** the pre-cut part is constructed from fibre layers with a differently preselected flowability in each case owing to thickening of the matrix system.

3. A method according to claim 1 or claim 2, **characterised in that**
the structure layer (4) is produced from a plurality of individually prefabricated fibre layers (6.1, 6.2, 6.3).

4. A method according to any one of the preceding claims, **characterised in that**
the structure layer (4) is prefabricated from fibres with a higher fibre module.

5. A method according to any one of the preceding claims, **characterised in that**
the fibre layers are produced from reaction resin-impregnated fibre mats.

## Revendications

1. Procédé de fabrication d'une structure composite renforcée par des fibres selon le procédé SMC, à partir d'une pièce (2) qui peut être consolidée sous l'effet de la chaleur, au cours d'un procédé de fluage ce composant d'au moins deux couches de fibres, susceptibles de fluer, imprégnées par un système de matrice et dont la structure est transformée par le formage par fluage,
selon lequel
la pièce (2) a plusieurs couches et elle est composée d'au moins une couche extérieure (8) à faible teneur en fibres et d'une couche de structure (4) avec une teneur relativement élevé en fibres, et
la couche extérieure (8) et la couche de structure (4) sont préfabriquées avec des dimensions différentes et/ des capacités de fluage différentes et elles sont pressées par fluage, en commun, pour former le composant terminé de façon que la surface supérieure de la couche extérieure (8) constitue une surface extérieure de classe A.

2. Procédé selon la revendication 1,
**caractérisé en ce que**
la pièce découpée se compose de couches de fibres avec une capacité de fluage différente présélectionnée, par l'épaisseur du système de matrice.

3. Procédé selon la revendication 1 ou 2,
**caractérisé en ce que**
la couche de structure (4) est formée de plusieurs couches de fibres susceptibles de fluer (6.1, 6.2, 6.3) préfabriquées séparément.

4. Procédé selon l'une des revendications précédentes,
**caractérisé en ce que**
la couche de structure (4) est préfabriquée avec des fibres ayant un module de fibres plus élevé.

5. Procédé selon l'une des revendications précédentes,
**caractérisé en ce que**
les couches de fibres sont réalisées à partir de nappes de fibres imprégnées de résine susceptible de réagir.
